Europäisches Patentamt

European Patent Office

Office européen des brevets

(19)

(11) Veröffentlichungsnummer: **0 247 993**
**B1**

# EUROPÄISCHE PATENTSCHRIFT

(12)

(45) Veröffentlichungstag der Patentschrift:
**20.12.89**

(21) Anmeldenummer: **87890086.9**

(22) Anmeldetag: **28.04.87**

(51) Int. Cl.⁴: **C 03 C 15/00,** C 03 C 3/091 //
G01N21/64, G01N21/80

(54) **Verfahren zur Herstellung von Trägermaterialien für optische Sensoren.**

(30) Priorität: **28.05.86 AT 1451/86**

(43) Veröffentlichungstag der Anmeldung:
**02.12.87 Patentblatt 87/49**

(45) Bekanntmachung des Hinweises auf die Patenterteilung:
**20.12.89 Patentblatt 89/51**

(84) Benannte Vertragsstaaten:
**AT CH DE FR GB LI**

(56) Entgegenhaltungen:
**US-A- 4 080 188**
**US-A- 4 086 074**

(73) Patentinhaber: **AVL AG, Grabenstrasse 11,
CH-8201 Schaffhausen (CH)**

(72) Erfinder: **Offenbacher, Helmut, Dr., Steinfeldgasse 2,
A-8020 Graz (AT)**
Erfinder: **Kroneis, Herbert, Dipl.-Ing. Dr., Jakob
Gschiel-Gasse 8/21, A-8052 Graz (AT)**

(74) Vertreter: **Krause, Walter, Dr. Dipl.-Ing. et al,
Postfach 200 Singerstrasse 8, A-1010 Wien (AT)**

## Beschreibung

Die Erfindung betrifft ein Verfahren zur Herstellung von Trägermaterialien für optische Sensoren, die zur Messung von Analytkonzentrationen, -aktivitäten und -partieldrücken dienen.

Die sensitive Schicht dieser Sensoren besteht aus einem mit dem Analyt unter Veränderung seiner optischen Eigenschaften in Wechselwirkung tretenden Indikatorfarbstoff, der an einem transparenten Substrat mit großer spezifischer Oberfläche immobilisiert ist. Das Trägermaterial bildet eine dünne mikroporöse Schicht auf einem transparenten, mechanisch stabilen Sensorträger, über den das mit dem Indikatorfarbstoff in Wechselwirkung tretende Licht eingekoppelt wird. Je nach Indikatortyp wird über den Sensorträger das reflektierte Licht (Absorptionsindikator) bzw. das Fluoreszenzlicht (Fluoreszenzindikator) ausgekoppelt und über die Intensität dieses Meßsignals auf den zu messenden Parameter geschlossen.

Um eine gute Auflösung des Meßsignals zu gewährleisten, muß das Trägermaterial eine genügend große Indikatormenge tragen können.

Bei der Bestimmung ionischer Analyte muß die Probe direkt mit dem am Trägermaterial fixierten Indikator gemäß dem nachfolgenden Schema wechselwirken, was bedingt, daß das Trägermaterial eine genügend hohe spezifische Oberfläche besitzt.

$$\text{—IND-X} + A^\pm \rightleftharpoons \text{—IND}^\pm + AX$$

Im Falle der chemischen Immobilisierung von Indikatorfarbstoffen empfiehlt es sich, als Trägermaterial mikroporöses Glas mit einer Struktur analog «controlled porous glass» (CPG) zu verwenden.

CPG stellt ein Pulver dar und ist in bezug auf die Fixierung am Sensorträger problematisch. Ein gangbarer Weg zur Fixierung von pulverförmigem mikroporösem Glas auf transparenten Trägern ist in der DE-OS 3 343 636 beschrieben. Danach wird das mikroporöse Glas auf bis zum Erweichungspunkt erhitzte Glasträger gesintert und anschließend der Immobilisierung des Indikatorfarbstoffes sowie dessen spezifischer Mikroumgebung unterzogen.

CPG = controlled porous glass erhält man durch thermisches Entmischen von Borosilikatglas und anschließender Auslaugung der entmischten Boratphase mit verdünnten Säuren, vornehmlich 3n HCl. Das verbleibende SiO$_2$-Gerüst besitzt Wurmstruktur und zeichnet sich durch eine extrem hohe spezifische Oberfläche aus.

Gemäß Gibbs'scher Phasenregel treten in der Mischungslücke des ternären Systems SiO$_2$-B$_2$O$_3$-Na$_2$O drei flüssige Phasen auf, wobei sich die einzelnen Phasen in Form wurmartiger Entmischungsstrukturen durchdringen.

Außer der Erzeugung von CPG-Pulver für die Chromatographie etc. eignet sich diese Methode auch für die Oberflächenveredelung von Glasgeräten sowie zur Entspiegelung von Glasoberflächen.

Bei der Oberflächenveredelung von Glas werden Glasgeräte aus Borosilikatglas entmischt und anschließend die gegen Säuren nicht resistenten entmischten Phasen mit verdünnten Säuren ausgelaugt. Die in einer mehr/weniger dicken Schicht verbleibende mikroporöse zu über 95% aus SiO$_2$ bestehende Struktur wird in einem Nachbrennprozeß bei etwa 800°C unter dem eigentlichen Schmelzpunkt von SiO$_2$ zu porenfreiem Quarzglas verdichtet (Revitrifizierung). Die so erzeugten Artikel sind unter der Bezeichnung VYCOR-Glas bekannt und zeichnen sich durch eine hohe chemische Resistenz und Temperaturbeanspruchbarkeit aus.

Diese Art der Oberflächenveredelung von Borosilikatgläsern wird z.B. in der US-PS 2 221 709 beschrieben.

In der US-PS 4 080 188 werden die mikroporösen Glasstrukturen zur Entspiegelung von Glasoberflächen beschrieben. Der Entmischungsvorgang entspricht nach dieser Patentschrift vollständig jenem in der vorangehend genannten Patentschrift. Das entmischte Glas wird bis zu einer Tiefe von maximal 1 µm porosifiziert und der verbleibende entmischte Glaskörper in einem Folgeschritt durch Erhitzen über die der Liquiduslinie entsprechenden Temperatur (680°C) zum Zwecke der Rücküberführung in den Status des amorphen Borosilikatglases erhitzt. An der Oberfläche verbleibt eine nichtreflektierende mikroporöse SiO$_2$-Schicht, wobei der Porendurchmesser 1000 Å nicht überschreitet. Als Ausgangsmaterial dienen Borosilikatgläser mit einem B$_2$O$_3$-Gehalt von 13-16%.

Die Maßnahme der Rücküberführung ins amorphe Borosilikatglas liegt darin begründet, daß die Porosifizierung mit Abschluß des Auslaugungsprozesses mit 3n HCl nur dann abgeschlossen ist, wenn das entmischte und oberflächlich porosifizierte Glas trocken gelagert wird. Bei Feuchtigkeitskontakt (Kondenswasser) setzt sich der Auflösungsprozeß der Boratphase zwar langsam aber beständig fort. Ergebnis dieses Prozesses ist eine tiefergreifende Porosifizierung und Zerstörung des zurückbleibenden SiO$_2$- bzw. silikatischen Gerüstes durch Reaktion mit der abzuführenden alkalisch reagierenden Boratlösung.

Der Verfahrensschritt der Rücküberführung ins amorphe Borosilikatglas bedingt das Auftreten von Spannungen im Grenzbereich zwischen mikroporöser SiO$_2$-Schicht und Glaskörper was zum Abplatzen der antireflektierenden Schicht führt. Nach den genannten Patentschriften wurde diese Problematik einerseits durch Erzeugung dünner, mikroporöser Schichten (1 µm), anderseits durch Schaffung mikroporöser Strukturen mit einem großen Porendurchmesser zu SiO$_2$-Gerüstwandstärke-Verhältnis, welches durch hohe B$_2$O$_3$-Gehalte (13-16%) erreicht wird, gelöst.

Die Erfindung geht von dem Gedanken aus, daß mikroporöse Sensorschichten eine große für die Indikatoraufnahme befähigte Oberfläche benötigen, d.h. eine möglichst dicke mikroporöse Schicht mit großer spezifischer Oberfläche. Da von derartigen Sensoren eine möglichst kurze Einstellzeit des Meßwertes, also eine möglichst rasche Aufäquilibrierung der Sensorschicht mit dem zu messenden Analyt gefordert wird, stellt die optimale Schichtstärke des Trägermaterials einen Kompromiß zwischen Signal-intensität und Signaleinstellzeit dar. Wie Messungen des Erfinders zeigen, liegt das Optimum der Schichtstärke der mikroporösen Schicht bei 5 bis 20 μm.

Eine derartige Schichtstärke ist mit den in den zitierten Patentschriften angeführten Problemlösungsschritten nicht erreichbar.

Ziel der Erfindung ist ein Verfahren zur Herstellung mikroporöser Trägermaterialien, die in einer 5 bis 20 μm dicken homogenen Schicht einem transparenten mechanisch stabilen Sensorträger anhaften.

Erfindungsgemäß wird ein Borosilikatglaskörper mit einem $B_2O_3$-Gehalt von < 13 Gew.-% in folgenden Schritten verarbeitet:

a) Thermische Entmischung im Temperaturbereich zwischen 500 und 560°C, wobei die Temperatur durch die Glaszusammensetzung definiert ist und maximal ± 10°C variieren darf, sowie einer Prozeßdauer von mindestens 3 Tagen, vorzugsweise 5 bis 10 Tagen

b) Entfernung der obersten Glasschicht von vorzugsweise mindestens 10 μm in jenem Oberflächenbereich, der porosifiziert sein soll

c) Auslaugen der entmischten Boratphase mit verdünnten Mineralsäuren durch mindestens 2 Tage bei einer Temperatur zwischen 70 bis 98°C

d) Nachbehandlung der mikroporösen Schicht und zwar chemisch mit konzentrierter Schwefelsäure und konzentrierter Salpetersäure, vorzugsweise über 2 Stunden bei 20°C, und thermisch bei 450 bis 700°C, vorzugsweise durch 10 Minuten bis 2 Stunden, oder in umgekehrter Reihenfolge.

Bei den in den eingangs zitierten Patentschriften angegebenen Borosilikatgläsern werden durchwegs höhere Boroxidgehalte von über 13 Gew.-%, genannt. Diese hohen Gehalte an $B_2O_3$ bedingen bei der Entmischung des Glases eine durchgehende wurmartige Entmischungsstruktur der einander durchdringenden Phasen. Beim Behandeln mit Säuren kommt es demnach zu einer von der Auslaugungszeit abhängigen mehr/weniger in die Tiefe des Werkstückes reichenden Porosifizierung.

Durch Senken des Boroxidgehaltes im Glas auf < 13%, vornehmlich auf 3,5-11%, gelingt es überraschenderweise bei der thermischen Behandlung des Glases isolierte Entmischungsbezirke herzustellen, die ihrerseits Wurmstruktur besitzen, sich amöbenartig durchdringen, aber untereinander nicht zusammenhängen. Die einzelnen Entmischungsbezirke sind unregelmäßig, besitzen je nach $B_2O_3$-Gehalt, Entmischungszeit und Entmischungstemperatur einen mittleren Durchmesser von 5 bis 20 μm und sind voneinander durch 1 μm dicke Silikathäute getrennt. Bei der anschließenden Porosifizierung wurden nur die mit der Säure in Kontakt tretenden Entmischungsbezirke ausgelaugt, die benachbarten Entmischungsbezirke werden vom Auslaugungsprozeß deshalb nicht erfaßt, weil die zwischenliegenden Silikathäute das Durchdiffundieren der Säure hemmen.

Die nachfolgend beschriebenen Figuren 1 bis 6 sollen das Verständnis des erfindungsgemäßen Verfahrens erleichtern.

Es zeigen:

Fig. 1 das an sich bekannte Prinzip eines für das Verfahren geeigneten Sensors,

Fig. 2 ein Phasendiagramm,

Fig. 3 Entmischungsstrukturen, die

Fig. 4 und 5 Diagramme und die

Fig. 6 einen Schnitt durch einen zylindrischen Sensorträger.

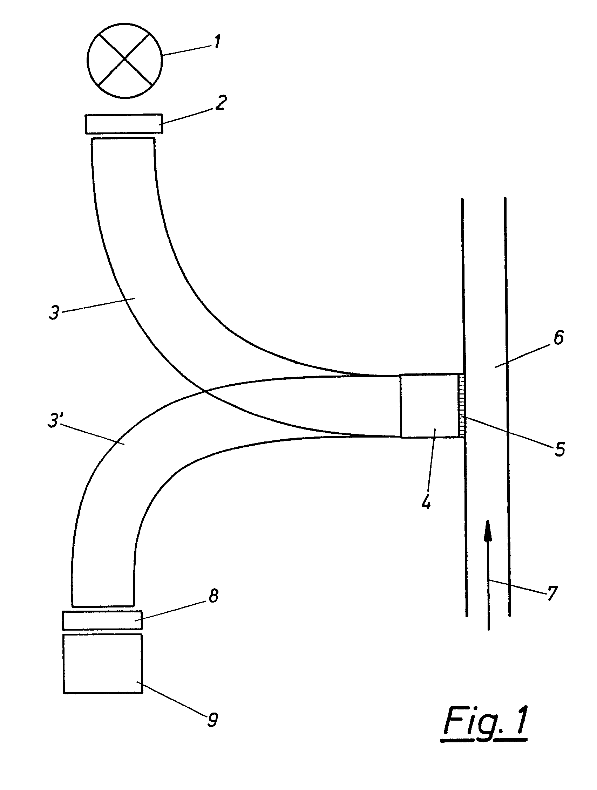

Das Prinzip solcher optischer Sensoren ist in Figur 1 dargestellt. Das für die Anregung des Indikators benötigte Licht wird von der Lichtquelle 1 emittiert, im optischen Filter 2 von den restlichen Spektralbestandteilen separiert und über den Lichtleiter 3 sowie den Sensorträger 4 zur indikatortragenden sensitiven Schicht 5 geleitet. Das von der Schicht emittierte bzw. reflektierte Licht wird über Lichtleiter 3' abgeleitet, im optischen Filter 8 von störenden Lichtanteilen befreit und mittels Fotodetektor 9 vermessen. Die sensitive Schicht 5 steht in der Meßkammer 6 mit der Probe, die durch Pfeile 7 angedeutet ist, in Kontakt.

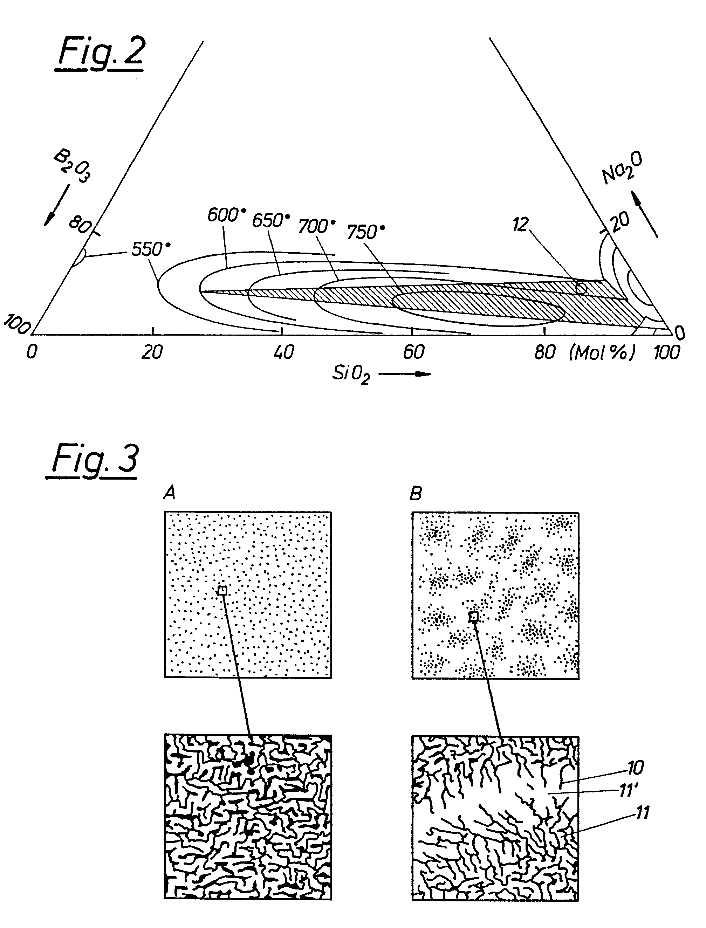

In Figur 2 ist das Phasendiagramm mit der schraffierten Mischungslücke des ternären Systems $SiO_2$-$B_2O_3$-$Na_2O$ dargestellt (H. Scholze - Glas - Natur, Struktur und Eigenschaften, 2. Auflage. S. 33). Der schraffierte Bereich stellt die Mischungslücke dar, der Punkt 12 bezeichnet die Lage des im Beispiel verwendeten Glases unter der Annahme, daß $Al_2O_3$ = $SiO_2$ und $K_2O$ = $Na_2O$.

Figur 3 zeigt Entmischungsstrukturen von Borosilikatgläsern bei einem $B_2O_3$-Gehalt von > 13 Gew.-% ( = A) bzw. < 13 Gew.-% ( = B). Mit 10 sind entmischte Boratschläuche, mit 11 entmischtes Silikat bezeichnet. Wie aus Figur 3 B hervorgeht, werden benachbarte Entmischungsbezirke durch dazwischenliegende Silikathäute 11' getrennt, welche das Durchdiffundieren der Säure hemmen.

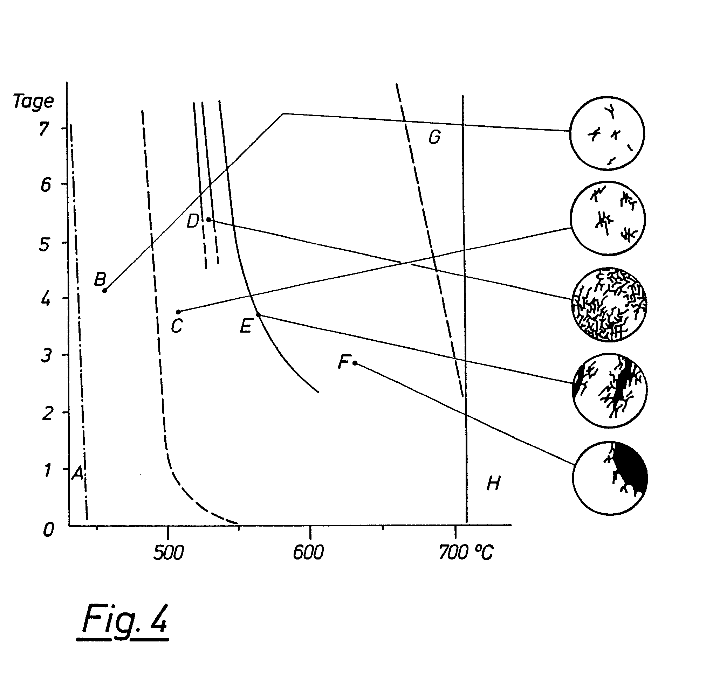

Die Entmischung von Borosilikatgläsern mit einem $B_2O_3$-Gehalt von weniger als 13 Gew.-% wurde unter Zuhilfenahme von Rasterelektronenmikroskop-Aufnahmen geätzter Proben im t/T-Feld (Entmischungszeit/Entmischungstemperatur) untersucht und ist in Figur 4 dargestellt. Wie die Ergebnisse zeigen, kann man im t/T-Feld 7 typische Stadien der Entmischung des Glases und der Differentation der Phasen unterscheiden.

A) Kinetische Hemmung der Entmischung infolge zu hoher Viskosität des Glases im Temperaturbereich bis etwa 450°C

B) Abhängig von der Versuchszeit kann man im Temperaturbereich von 450 bis 500°C in der Glasmatrix schlauchartige Entmischungskeime erkennen,

C) die bei Erhöhung der Versuchszeit bzw. Versuchstemperatur zahlenmäßig zunehmen und unter Verästelung anwachsen

D) In einem sehr engen Temperaturbereich 532 ± 7°) wuchern diese Verästelungen zu dem Boratgehalt des Glases entsprechenden 5 bis 20 μm Entmischungsbezirken an.

Da während des fortschreitenden Anwachsens der Entmischungsstrukturen die umgebende Glasmatrix an Boroxid vollständig verarmt, kommt der Wachstumsprozeß der Entmischungsschläuche noch vor dem vollständigen Zusammenwachsen zu einer durchgehenden mikroporösen Struktur zum Erliegen.

In diesem Stadium zeigt das Glas die für die Herstellung von Sensorträgern günstigste Entmischungsstruktur

E, F) Bei weiterer Erhöhung von t und/oder T kommt es gemäß Prinzip der minimalen Grenzfläche zum Sammeln der entmischten Phasen, wobei die Boratphase zu taschenartigen und schließlich tropfenartigen Gebilden aggregiert.

G) In diesem Stadium tritt Differenzierung des Glases auf.

G, H) Bei etwas über 700°C wird der Bereich der Mischungslücke verlassen, oberhalb dieser Temperatur wird der Zustand des homogenen Borosilikatglases wieder hergestellt.

Wie die Versuche zeigten, erfordert das für die Trägerdarstellung günstigste Stadium D die Einhaltung eines engen Temperaturbereiches.

Es hat sich als vorteilhaft erwiesen, in weiterer Ausgestaltung der Erfindung bei einem Boroxidgehalt des Glases von etwa 8-11 Gew.-% die thermische Entmischung bei 532 ± 7°C und einer Prozeßdauer von 7 ± 1 Tagen durchzuführen.

Überraschenderweise hat sich auch gezeigt, daß die entmischten Sensorträger ohne chemische bzw. mechanische Vorbehandlung nur schwer porosifizierbar sind. Es ist deshalb erfindungsgemäß vorgesehen, daß bei einem Alkalioxidgehalt des Ausgangsglases von ≤ 3,5 Gew.-% das Entfernen der obersten Glasschicht in der Stärke von mindestens 10 μm durch mechanische Mittel, wie Anschleifen oder Sandstrahlen, oder auf chemischem Wege durch Behandlung mit einem Glasätzmittel, wie z.B. Flußsäure, Ammoniumhydrogendifluorid oder Alkalien, erfolgt.

Die Auslaugung der Boratphase wird somit durch Anätzen mit $NH_4HF_2$, HF, $CaF_2/H_2SO_4$, KOH bzw. durch vorangehendes Anschleifen, Sandstrahlen etc. an der so nachbehandelten Fläche ermöglicht.

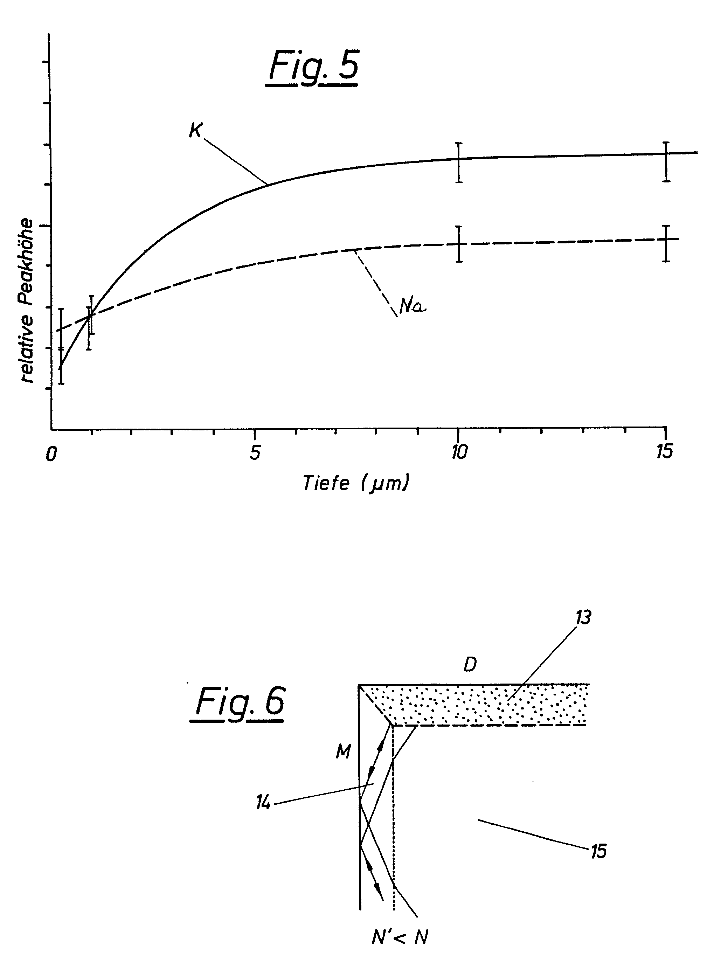

Mikrosondenuntersuchungen ionengedünnter Glasschnitte haben gezeigt, daß besonders bei mehrtägiger Hitzebehandlung des Glases der Alkaligehalt gegen dessen Oberfläche drastisch abnimmt. Die Figur 5 zeigt die Abnahme des Alkaligehaltes von Borosilikatglas mit niedrigem $B_2O_3$-Gehalt im Bereich von 11 Gew.-% nach sieben Tagen Entmischung bei 535°C (Mikrosondenanalyse ionengedünnter Glasproben relative Peakhöhen von Na und K bezogen auf Al). Der Alkaligehalt nimmt bereits in einer Tiefe von etwa 15 μm ab und erreicht in einer Tiefe von 0,2 μm für Kalium nur noch etwa 25%, für Natrium etwa 50%.

Dieses Phänomen bedeutet für die Herstellung von Sensorträgern zwei wesentliche Vorteile:

1. Der entmischte Glaskörper wird von einem wenige μm dicken Panzer chemisch resistenten Glases umhüllt und ist dem Auslaugungsprozeß nicht zugänglich. Die Porosifizierung wird erst durch gezieltes Entfernen dieses Panzers, wie z.B. Anschleifen der für das Tragen der sensitiven Schichten vorgesehenen Fläche, ermöglicht.

2. Optische Sensoren besitzen aus Gründen der Adaptierung vorwiegend zylindrisches Aussehen, wobei die Deckfläche die sensitive Schicht trägt; der Zylinder an sich soll möglichst gute Lichtleitereigenschaften besitzen.

Figur 6 zeigt einen Schnitt durch einen zylindrischen Sensorträger, wobei D die Deckfläche mit der porosifizierten Sensorschicht 13 bezeichnet. M bezeichnet die Mantelfläche, N' den Brechungsindex der Randzone 14, N den Brechungsindex des Glaskernes.

Die Lichtleitwirkung eines zylindrischen Stabes wird dann erhöht, wenn der Lichtleitstab vom Zentrum gegen den Randbereich einen negativen Brechungsindexgradienten zeigt.

Der Brechungsindex von Gläsern läßt sich gemäß Inkrementenrechnung aus deren Zusammensetzung ermitteln:

$$n_{Glas} = \frac{1}{100} \sum_i n_i p_i$$

$n_i$ = Brechzahl der einzelnen oxidischen Komponenten

$p_i$ = Mol-%e der oxidischen Komponenten

unter der Voraussetzung

$n_{i_{(a)}} > n_{i_{(b)}}$

wobei

a = $K_2O$, $Na_2O$
b = $SiO_2$, $Al_2O_3$ sowie $B_2O_3$

ergibt sich bei Verarmung an Alkalioxid gegen die Randzonen des Sensorträgers ein vom Alkalioxidgehalt des eingesetzten Glases abhängiger negativer Brechungsindexgradient. Bei einem Alkalioxidgehalt von 5 Gew.-% würde gemäß Mikrosondenbefund (Fig. 3) der Brechungsindex gegen den Rand um 0,02 abnehmen.

Die Nachbehandlung des Trägermaterials, d.h. der mikroporösen Schicht, ist notwendig. Die Art der Nachbehandlung hat auf die Eigenschaften der Sensoren einen entscheidenden Einfluß. Die Erfindung sieht folgende Nachbehandlungsschritte vor:

A) Vollständiges Überführen des verbleibenden Silikat-$SiO_2$-$H_2O$-Gerüstes in $SiO_2$ durch Behandeln mit einem Gemisch von 1 Teil konzentrierter Schwefelsäure und 1 Teil hochkonzentrierter Salpetersäure

B) Thermische Nachbehandlung bei Temperaturen zwischen 450 und 700°C, wobei die Behandlungszeit zwischen 10 Minuten und mehreren Stunden variiert werden kann.

Die Vorschaltung der Behandlung mit dem Säuregemisch vor dem Nachbrennungsprozeß führt zu einer Erhöhung der Lebensdauer des fertigen Sensorelementes um den Faktor 2 bis 3. Ferner haben Versuche gezeigt, daß durch die Variation der Nachbehandlung die physikochemischen Konstanten des immobilisierten Indikators stark beeinflußt werden können. In der nachstehenden Tabelle sind von pH-Sensoren die pKa-Werte ein und desselben immobilisierten Indikators bei Variation der Nachbehandlung aufgezeigt. Die Sensoren basieren auf chemischer Immobilisierung von Umbelliferon-3-carbonsäure via Amidbindung, wie sie in der DE-OS 3 343 636 beschrieben sind.

| Reihenfolge der Nachbehandlungsschritte | Nachbrennungsbedingung | pKa |
|---|---|---|
| B, A | 2 h 700°C | 7,10 - 7,15 |
| B, A | 1/2 h 450°C | 7,10 - 7,15 |
| A, B | 1/2 h 450°C | 7,60 |
| A, B | 1/2 h 650°C | 7,00 - 7,05 |

Die nach dem erfindungsgemäßen Herstellungsverfahren erhaltenen Sensoren zeichnen sich durch eine gute Reproduzierbarkeit der Schichtstärke aus. So zeigen rasterelektronenmikroskopische Aufnahmen bei ein und demselben Glastyp und Konstanthalten der Entmischungsbedingungen unabhängig von der Behandlungszeit mit 3n HCl eine Variation der Schichtstärke von maximal ± 5%.

*Beispiel*

Glaszylinder mit einer chemischen Zusammensetzung von 80 ± 2 Gew.-% $SiO_2$, 2,5 ± 20,5 Gew.-% $Al_2O_3$, 10 ± 1 Gew.-% $B_2O_3$, 0,5 Gew.-% $K_2O$, 2,5 Gew.-% $Na_2O$ sowie ca. 4 Gew.-% restliche Oxide werden 7 Tage bei 535°C im Muffelofen belassen. Von der für die Porosifizierung vorgesehenen Fläche wird eine Schicht von 15 µm abgeschliffen, wobei als Schleifpaste eine Mischung aus Carborundum und Glyzerin verwendet wird.

Die sorgfältig mit Wasser gereinigten Glaszylinder werden 2 bis 3 Tage mit 95 bis 98°C heißer 3n HCl behandelt. Die gewaschenen und getrockneten Sensorträger zeigen an der angeschliffenen Fläche eine 10 ± 0,3 µm tief reichende Porosifizierung.

Nach zweistündiger Behandlung mit einer Mischung, bestehend aus 1 Teil $H_2SO_4$ 98%ig und 1 Teil hochkonzentrierter Salpetersäure und mehrmaligem Waschen mit destilliertem Wasser, werden die Sensorträger im Muffelofen thermisch nachbehandelt. Bis zur chemischen Immobilisierung des Indikators werden die Sensorträger im Vakuum über Phosphorpentoxid gelagert.

Eine semiquantitative Kontrolle der Porosifizierung gelingt durch Aufbringen kationischer Farbstoffe, wie Methylenblau, welche via Ionenbindung am Trägermaterial fixiert werden. Nach Entfernen des überschüssigen Farbstoffes kann man den Sensorträger der photometrischen Untersuchung unterziehen; es ist jedoch günstig, den Farbstoff mit verdünnter Säure vom Trägermaterial zu desorbieren und die resultierende Lösung der photometrischen Untersuchung zuzuführen.

## Patentansprüche

1. Verfahren zur Herstellung von Trägermaterialien für optische Sensoren, die zur Messung von Analytkonzentrationen, -aktivitäten und -partialdrücken dienen, dadurch gekennzeichnet, daß ein Borosilikatglaskörper mit einem $B_2O_3$-Gehalt von < 13 Gew.-% in folgenden Verfahrensschritten verarbeitet wird:

a) Thermische Entmischung im Temperaturbereich zwischen 500 und 560°C, wobei die Temperatur durch die Glaszusammensetzung definiert ist und maximal ± 10°C variieren darf, sowie einer Prozeßdauer von mindestens 3 Tagen, vorzugsweise 5 bis 10 Tagen

b) Entfernung der obersten Glasschicht von vorzugsweise mindestens 10 µm in jenem Oberflächenbereich, der porosifiziert sein soll

c) Auslaugen der entmischten Boratphase mit verdünnten Mineralsäuren durch mindestens 2 Tage bei einer Temperatur zwischen 70 bis 98°C

d) Nachbehandlung der mikroporösen Schicht und zwar chemisch mit konzentrierter Schwefelsäure und konzentrierter Salpetersäure, vorzugsweise über 2 Stunden bei 20°C, und thermisch bei 450 bis 700°C, vorzugsweise durch 10 Minuten bis 2 Stunden, oder in umgekehrter Reihenfolge.

2. Verfahren nach Anspruch 1, dadurch gekennzeichnet, daß bei einem Boroxidgehalt des Glases von etwa 8 - 11 Gew.-% die thermische Entmischung bei 532 ± 7°C und einer Prozeßdauer von 7 ± 1 Tagen erfolgt.

3. Verfahren nach Anspruch 1 oder 2, dadurch gekennzeichnet, daß bei einem Alkalioxidgehalt des Ausgangsglases von ≤ 3,5 Gew.-% das Entfernen der obersten Glasschicht in der Stärke von mindestens 10 µm durch mechanische Mittel, wie Anschleifen oder Sandstrahlen, erfolgt.

4. Verfahren nach Anspruch 1 oder 2, dadurch gekennzeichnet, daß bei einem Alkalioxidgehalt des Ausgangsglases von ≤ 3,5 Gew.-% das Entfernen der obersten Glasschicht in der Stärke von mindestens 10 µm auf chemischem Wege durch Behandlung mit einem Glasätzmittel, wie z.B. Flußsäure, Ammoniumhydrogenidfluorid oder Alkalien, erfolgt.

5. Verfahren nach einem der Ansprüche 1 bis 4, dadurch gekennzeichnet, daß die Dicke der mikroporösen Schicht zur Aufnahme von Indikatoren auf 5 bis 20 µm, vorzugsweise 10 µm eingestellt wird.

6. Verfahren nach Anspruch 1, dadurch gekennzeichnet, daß als Trägermaterial ein Borosilikatglaskörper folgender Zusammensetzung genommen wird:

| | | |
|---|---|---|
| $SiO_2$ | 80 ± 2 | Gew.-% |
| $Al_2O_3$ | 2,5 ± 1 | Gew.-% |
| $B_2O_3$ | 10 ± 1 | Gew.-% |
| $K_2O$ | 1,0 ± 0,5 | Gew.-% |
| $Na_2O$ | 2,5 ± 0,5 | Gew.-% |

## Claims

1. A method of preparing substrates for optical sensors for measuring the concentrations, activities and partial pressures of samples, wherein a borosilicate glass core with a $B_2O_3$ content of less than 13 percent by weight is processed in the following steps:

a) thermal decomposition, in the temperature range of 500-560°C, the actual temperature being defined by the composition of the glass, with a maximum variation of ± 10°C, for a period of at least 3 days, preferably 5-10 days

b) removal of the topmost layer of glass to a depth of preferably at least 10 µm in the area of the surface to be rendered porous

c) leaching of the separated borate phase with diluted mineral acids for a minimum of 2 days at 70-98°C

d) after treatment of the microporous layer:

— chemical treatment, i.e., with concentrated sulphuric acid and concentrated nitric acid, preferably for 2 hours at 20°C;

— heat-treatment, i.e., baking at 450-700°C, preferably for 10 minutes up to 2 hours; or in reverse order.

2. A method as in claim 1, wherein thermal decomposition is performed at 532 ± 7°C for a period of 7 ± 1 days, if the boron oxide content of the glass is 8-11 percent by weight approximately.

3. A method according to claim 1 or 2, wherein the topmost layer of glass is removed to a depth of at least 10 µm by mechanical processes, such as abrasion or sandblasting, in the instance of an alkaline oxide content of the untreated glass of ≤ 3.5 percent by weight.

4. A method according to claim 1 or 2, wherein the topmost layer of glass is removed to a depth of at least 10 µm by chemical processes, such as treatment with an etching reagent, e.g., hydrofluoric acid, ammonium hydrogendifluoride, or alkalis, in the instance of an alkaline oxide content of the untreated glass of ≤ 3.5 percent by weight.

5. A method according to any of claims 1 to 4, wherein the thickness of the microporous layer accommodating the indicators is between 5 and 20 µm, preferably 10 µm.

6. A method according to claim 1, wherein a borosilicate glass core of a composition as following is used as a carrier:

| | | |
|---|---|---|
| $SiO_2$ | 80 ± 2 | percent by weight |
| $Al_2O_3$ | 2.5 ± 1 | percent by weight |
| $B_2O_3$ | 10 ± 1 | percent by weight |
| $K_2O$ | 1.0 ± .5 | percent by weight |
| $Na_2O$ | 2.5 ± .5 | percent by weight |

**Revendications**

1. Procédé pour la préparation de matériaux de support pour détecteurs optiques servant à la mesure de concentrations, activités et pressions partielles de substances à analyser, caractérisé en ce que l'on traite un corps en verre au borosilicate ayant une teneur en $B_2O_3$ < 13% en poids, dans les étapes de processus suivantes:

a) démixtion thermique dans la plage de température comprise entre 500 et 560°C, la température étant déterminée par la composition du verre et ne devant varier que de ± 10°C au maximum, et pendant une durée de processus d'au moins 3 jours, de préférence de 5 à 10 jours,

b) élimination de la couche de verre supérieure, de préférence d'au moins 10 µ, dans la zone de la surface qui doit être rendue poreuse,

c) lessivage avec des acides minéraux dilués de la phase de borate démixée, pendant au moins 2 jours à une température comprise entre 70 et 98°C,

d) post-traitement de la couche microporeuse, à savoir chimiquement avec de l'acide sulfurique concentée et de l'acide nitrique concentré, de préférence pendant 2 heures à 20°C, et thermiquement à 450-700°C, de préférence pendant 10 minutes à 2 heures, ou dans l'ordre inverse.

2. Procédé selon la revendication 1, caractérisé en ce que, dans le cas d'une teneur du verre en oxyde de bore d'environ 8-11% en poids, la démixtion thermique est effectuée à 532 ± 7°C et pendant une durée de processus de 7 ± 1 jours.

3. Procédé selon la revendication 1 ou 2, caractérisé en ce que, dans le cas d'une teneur ≤ 3,5% en poids, en oxyde alcalin du verre initial, l'élimination de la couche de verre supérieure, sur l'épaisseur d'au moins 10 µm, est effectuée par meulage ou passage du jet de sable.

4. Procédé selon la revendication 1 ou 2, caractérisé en ce que, dans le cas d'une teneur ≤ 3,5% en poids, en oxyde alcalin du verre initial, l'élimination de la couche de verre supérieure, sur l'épaisseur d'au moins 10 µm, est effectuée par des méthodes chimiques, par traitement avec un agent attaquant le verre, comme par exemple l'acide fluorhydrique, l'hydrogénofluorure d'ammonium ou des alcalins.

5. Procédé selon l'une quelconque des revendications 1 à 4, caractérisé en ce que l'on ajuste l'épaisseur de la couche microporeuse pour l'absorption d'indicateurs, à 5-20 µm, de préférence de 10 µm.

6. Procédé selon la revendication 1, caractérisé en ce que l'on prend comme matériau de support un corps de verre au borosilicate ayant la composition suivante:

| | | |
|---|---|---|
| $SiO_2$ | 80 ± 2 | % en poids |
| $Al_2O_3$ | 2,5 ± 1 | % en poids |
| $B_2O_3$ | 10 ± 1 | % en poids |
| $K_2O$ | 1,0 ± 0,5 | % en poids |
| $Na_2O$ | 2,5 ± 0,5 | % en poids |

_Fig.1_

_Fig.2_

_Fig.3_

*Fig.4*

## Fig. 5

## Fig. 6